# EUROPEAN PATENT APPLICATION

(11) **EP 4 387 345 A1**
(43) Date of publication of application: **19.06.2024**
(21) Application number: 22855427.5
(22) Date of filing: 09.08.2022
(51) Int. Cl.: H04W 56/00

(54) **TA-BASED SYNCHRONIZATION METHOD, AND DEVICE, APPARATUS AND STORAGE MEDIUM**

(30) Priority: 13.08.2021 CN 202110933040
(71) Applicant: Datang Mobile Communications Equipment Co., Ltd., Beijing 100085 (CN)
(72) Inventor: ZHANG, Bufang, Beijing 100085 (CN); XU, Meng, Beijing 100085 (CN); LIANG, Jing, Beijing 100085 (CN); ZENG, Erlin, Beijing 100085 (CN)
(74) Representative: dompatent von Kreisler Selting Werner - Partnerschaft von Patent- und Rechtsanwälten mbB
(86) International application number: PCT/CN2022/111121
(87) International publication number: WO 2023/016446

(57) **Abstract**

Provided in the embodiments of the present disclosure are a TA-based synchronization method, and a device, an apparatus and a storage medium, wherein the method is applied to a terminal device. The method comprises: determining a second TA between a terminal device and a cell where a target beam, which performs data transceiving with the terminal device, is located; and applying the second TA, wherein the second TA is used for synchronization between the terminal device and the cell where the target beam is located. The present disclosure aims to solve the problem, in the relevant art, of a time delay caused by the acquisition of a TA between a UE and a target cell by means of random access after the UE switches the data transmission thereof to the target cell, thereby improving the switching efficiency of a terminal device.

## Description

### CROSS-REFERENCE TO RELATED APPLICATION

The application claims priority to Chinese Patent Application No. 2021109330401, filed on August 13, 2021, entitled "TA-Based Synchronization Method, and Device, Apparatus and Storage Medium", which is hereby incorporated by reference in its entirety.

### FIELD

The application relates to the field of communication, and in particular to timing advance (TA) based synchronization methods, devices, apparatuses, and a storage medium.

### BACKGROUND

In an inter-cell multiple transmitting receiving point (inter-cell mTRP) scenario, a terminal device may maintain a connection with a cell and transmit and receive data using a target beam of another cell. However, the geographical location of the cell where the target beam is located may be different from the geographical location of the current serving cell, which may cause the timing advance (TA) between the user equipment (UE) and the cell where the target beam is located to be different from the current serving cell. If random access is used to obtain the TA between the UE and the cell where the target beam is located, it will result in a large delay.

### SUMMARY

Embodiments of the application provide timing advance (TA) based synchronization methods, devices, apparatuses, and a storage medium, to solve a delay problem caused by obtaining the TA between the terminal device, such as a user equipment (UE), and the target cell using random access after the terminal device hands over its data transmission and reception to the target cell, and improve the handover efficiency for the terminal device.

An embodiment of the application provides a timing advance (TA) based synchronization method, applied to a terminal device, including:
determining a second TA between the terminal device and a cell where a target beam for data transmission and reception of the terminal device is located; and
applying the second TA, where the second TA is used for synchronization between the terminal device and the cell where the target beam is located.

In an embodiment, applying the second TA includes:
receiving first indication information transmitted from a network side device, where the first indication information is used to indicate the terminal device to hand over from a current beam for data transmission and reception to the target beam; and
triggering to apply the second TA based on the first indication information.

In an embodiment, determining the second TA between the terminal device and the cell where the target beam for data transmission and reception of the terminal device is located includes:
receiving first indication information transmitted from a network side device, where the first indication information is used to indicate the terminal device to hand over from a current beam for data transmission and reception to the target beam; and
determining, based on the first indication information, the second TA between the terminal device and the cell where the target beam for data transmission and reception of the terminal device is located.

In an embodiment, the first indication information is first downlink control information (DCI) and/or first media access control-control element (MAC-CE).

In an embodiment, the first indication information includes one or more of the following:
TA of the cell where the target beam is located;
a difference of the TA of the cell where the target beam is located relative to TA of a current serving cell of the terminal device;
a difference of the TA of the cell where the target beam is located relative to TA of a cell where the current beam is located;
an indication indicating that a TA difference is based on the current serving cell;
an indication indicating that a TA difference is based on the cell where the current beam is located;
a physical cell identifier (PCI) of the cell where the target beam is located;
a transmission configuration indication (TCI) state identifier corresponding to the target beam;
a beam index corresponding to the target beam;
a band width part (BWP) identifier associating with the cell where the target beam is located;
an index of the cell where the target beam is located;
an indication identifier triggering the terminal device to apply the second TA;
an indication indicating that the second TA of the cell where the target beam is located is the same as the TA of the current serving cell; or
an indication indicating that the second TA of the cell where the target beam is located is the same as the TA of the cell where the current beam is located.

In an embodiment, the method further includes:
receiving first configuration information transmitted from a network side device, where the first configuration information is used to indicate the second TA;
where determining the second TA between the terminal device and the cell where the target beam for data transmission and reception of the terminal device is located includes:
   determining the second TA based on the first configuration information.

In an embodiment, the first configuration information is any one of a first radio resource control (RRC) message, second DCI, or a second MAC-CE.

In an embodiment, the first configuration information includes one or more of the following:
an indication indicating that a TA difference is based on a current serving cell of the terminal device;
an indication indicating that a TA difference is based on a cell where a current beam is located;
a list of TA values of a cell where a candidate target beam is located;
a list of TA differences between a TA value of the cell where the target beam is located and a TA value of the current serving cell of the terminal device;
a list of TA differences between the TA value of the cell where the target beam is located and a TA value of the cell where the current beam is located;
a list of PCIs of the cell where the candidate target beam is located;
a list of TCI state identifiers corresponding to the candidate target beam;
a list of beam indexes corresponding to the candidate target beam;
a list of BWP identifiers associating with the cell where the candidate target beam is located;
a list of indexes of the cell where the candidate target beam is located;
an indication indicating that the second TA of the cell where the candidate target beam is located is the same as the TA of the current serving cell; or
an indication indicating that the second TA of the cell where the candidate target beam is located is the same as the TA of the cell where the current beam is located.

In an embodiment, the method further includes:
receiving second configuration information transmitted from a network side device, where the second configuration information includes one or more of the following:
sounding reference signal (SRS) configuration information;
uplink data scheduling configuration information;
a list of downlink reference signal configuration information corresponding to a current serving cell of the terminal device and a cell where a candidate target beam is located;
a list of PCIs of the cell where the candidate target beam is located;
a list of TCI state identifiers corresponding to the candidate target beam;
a list of beam indexes corresponding to the candidate target beam;
a list of BWP identifiers associating with the cell where the candidate target beam is located; or
a list of indexes of the cell where the candidate target beam is located.

In an embodiment, the second configuration information is any one of a second RRC message, third DCI, or a third MAC-CE.

In an embodiment, the method further includes:
performing uplink signal transmission or uplink data transmission based on the SRS configuration information and/or uplink data scheduling configuration information, to make the network side device measure the uplink signal or the uplink data and determine, based on a measurement result, a TA value between the terminal device and the current serving cell and/or a TA value between the terminal device and the cell where the candidate target beam is located.

In an embodiment, the method further includes:
measuring a downlink reference signal transmitted from the network side device based on the list of downlink reference signal configuration information corresponding to the current serving cell and the cell where the candidate target beam is located,
where measuring the downlink reference signal transmitted from the network side device includes one or more of the following:
   measuring a reception time of each of downlink reference signals in the list of downlink reference signal configuration information;
   measuring a reception time difference of each of the downlink reference signals relative to the cell where the current beam is located; or
   measuring a reception time difference of each of the downlink reference signals relative to the current serving cell.

In an embodiment, the method further includes:
transmitting second indication information to the network side device, where the second indication information includes one or more of the following:
a list of reception time of each of the downlink reference signals;
a list of reception time differences relative to the cell where the current beam is located;
a list of reception time differences relative to the current serving cell;
an indication indicating that a reception time difference is based on the current serving cell;
an indication indicating that a reception time difference is based on the cell where the current beam is located;
a list of PCIs of the cell where the candidate target beam is located;
a list of TCI state identifiers corresponding to the candidate target beam;
a list of beam indexes corresponding to the candidate target beam;
a list of BWP identifiers associating with the cell where the candidate target beam is located; or
a list of indexes of the cell where the candidate target beam is located.

In an embodiment, the second TA is determined based on a TA difference indicated by the current serving cell and the TA value of the current serving cell and/or based on a TA difference indicated by the cell where the current beam is located and the TA value of the cell where the current beam is located.

In an embodiment, the method further includes:
maintaining first TA, where the first TA is TA between the terminal device and the current serving cell of the terminal device.

An embodiment of the application provides a timing advance (TA) based synchronization method, applied to a network side device, including:
transmitting first indication information to a terminal device to trigger the terminal device to apply second TA based on the first indication information,
where the second TA is TA between the terminal device and a cell where a target beam for data transmission and reception of the terminal device is located; and
the first indication information is used to indicate the terminal device to hand over from a current beam for data transmission and reception to the target beam.

In an embodiment, the method further includes:
transmitting first configuration information to the terminal device, where the first configuration information is used to indicate the second TA.

In an embodiment, the first configuration information is any one of a first radio resource control (RRC) message, second downlink control information (DCI), or a second media access control-control element (MAC-CE).

In an embodiment, the method further includes:
transmitting second configuration information to the terminal device, where the second configuration information includes one or more of the following:
sounding reference signal (SRS) configuration information;
uplink data scheduling configuration information;
a list of downlink reference signal configuration information corresponding to a current serving cell and a cell where a candidate target beam is located;
a list of PCIs of the cell where the candidate target beam is located;
a list of TCI state identifiers corresponding to the candidate target beam;
a list of beam indexes corresponding to the candidate target beam;
a list of band width part (BWP) identifiers associating with the cell where the candidate target beam is located; or
a list of indexes of the cell where the candidate target beam is located.

In an embodiment, the second configuration information is any one of a second RRC message, third DCI, or a third MAC-CE.

In an embodiment, the method further includes:
measuring uplink signal or uplink data transmitted from the terminal device based on the SRS configuration information and/or uplink data scheduling configuration information, and determining, based on a measurement result, a TA value between the terminal device and the current serving cell and/or a TA value between the terminal device and the cell where the candidate target beam is located,
where measuring the uplink signal or uplink data transmitted from the terminal device includes one or more of the following:
   measuring the TA value between the terminal device and the current serving cell and the TA value between the terminal device and the cell where the candidate target beam is located;
   measuring a TA difference of the TA value of the cell where the candidate target beam is located relative to the TA value of the current serving cell; or
   measuring a TA difference of the TA value of the cell where the candidate target beam is located relative to a TA value of a cell where the current beam is located.

In an embodiment, the method further includes:
receiving second indication information transmitted from the terminal device;
determining, based on the second indication information, the TA value between the terminal device and the current serving cell and/or the TA value between the terminal device and the cell where the candidate target beam is located,
where the second indication information includes one or more of the following:
   a list of reception time of each of the downlink reference signals in the downlink reference signal configuration information list;
   a list of reception time differences relative to the cell where the current beam is located;
   a list of reception time differences relative to the current serving cell;
   an indication indicating that a reception time difference is based on the current serving cell;
   an indication indicating that a reception time difference is based on the cell where the current beam is located;
   a list of PCIs of the cell where the candidate target beam is located;
   a list of TCI state identifiers corresponding to the candidate target beam;
   a list of beam indexes corresponding to the candidate target beam;
   a list of BWP identifiers associating with the cell where the candidate target beam is located; or
   a list of indexes of the cell where the candidate target beam is located.

An embodiment of the application provides a terminal device, including a memory, a transceiver, and a processor,
where the memory is used to store a computer program, the transceiver is used to transmit and receive data under control of the processor, and the processor is used to read the computer program in the memory and perform the steps in the TA based synchronization method applied to the terminal device.

An embodiment of the application provides a network side device, including a memory, a transceiver, and a processor,
where the memory is used to store a computer program, the transceiver is used to transmit and receive data under control of the processor, and the processor is used to read the computer program in the memory and perform the steps in the TA based synchronization method applied to the network side device.

An embodiment of the application provides a timing advance (TA) based synchronization apparatus, applied to a terminal device, including:
a determining unit, used for determining a second TA between the terminal device and a cell where a target beam for data transmission and reception of the terminal device is located; and
an applying unit, used for applying the second TA, where the second TA is used for synchronization between the terminal device and the cell where the target beam is located.

An embodiment of the application provides a timing advance (TA) based synchronization apparatus, applied to a network side device, including:
a first transmitting unit, used for transmitting first indication information to a terminal device to trigger the terminal device to apply second TA based on the first indication information,
where the second TA is TA between the terminal device and a cell where a target beam for data transmission and reception of the terminal device is located; and
the first indication information is used to indicate the terminal device to hand over from a current beam for data transmission and reception to the target beam.

An embodiment of the application provides a processor readable storage medium storing a computer program that, when executed by a processor, causes the processor to perform the steps in the TA based synchronization method applied to the terminal device.

An embodiment of the application provides a processor readable storage medium storing a computer program that, when executed by a processor, causes the processor to perform the steps in the TA based synchronization method applied to the network side device.

In the TA based synchronization methods, devices, apparatuses, and the storage medium provided by the application, by determining the second TA between the terminal device and the cell where the target beam for data transmission and reception of the terminal device is located and applying the second TA, where the second TA is used for synchronization between the terminal device and the cell where the target beam is located, a delay problem in related art caused by obtaining the TA between the terminal device and the target cell using random access after the terminal device hands over its data transmission and reception to the target cell is solved, and the handover efficiency for the terminal device is improved.

### BRIEF DESCRIPTION OF DRAWINGS

In order to more clearly illustrate the solutions of the embodiments according to the application and the related art, the accompanying drawings used in the description for the embodiments or the related art are briefly introduced below. It should be noted that the drawings in the following description are only some embodiments of the application. For those of ordinary skill in the art, other drawings may be obtained according to these drawings without creative effort.
FIG. 1 is a schematic diagram of an inter-cell multiple transmitting receiving point (inter-cell mTRP) scenario;
FIG. 2 is a first schematic flowchart of a timing advance (TA) based synchronization method according to an embodiment of the application;
FIG. 3 is a second schematic flowchart of TA based synchronization method according to an embodiment of the application;
FIG. 4 is a first schematic structural diagram of TA based synchronization apparatus according to an embodiment of the application;
FIG. 5 is a second schematic structural diagram of TA based synchronization apparatus according to an embodiment of the application;
FIG. 6 is a schematic structural diagram of a terminal device according to an embodiment of the application; and
FIG. 7 is a schematic structural diagram of a network device according to an embodiment of the application.

### DETAILED DESCRIPTION OF THE EMBODIMENTS

The term "and/or" in the embodiments of the application describes three situations of the correlation objects. For example, A and/or B may represent three situations: only A, A and B together, and only B. The character "/" generally represents that the two objects on two sides have a relationship of "or".

The term "multiple" in the embodiments of the application refers to two or more, and other quantifiers are similar to it.

The solutions according to the application are clearly described below in combination with the accompanying drawings in the embodiments of the application. It should be noted that the described embodiments are some embodiments of the application, rather than all the embodiments. Based on the embodiments of the application, all other embodiments obtained by those of ordinary skill in the art without creative effort are within the scope of protection of the application.

In an inter-cell multiple transmitting receiving point (inter-cell mTRP) scenario, a terminal device may maintain a connection with a cell and transmit and receive data using a physical channel of another cell.

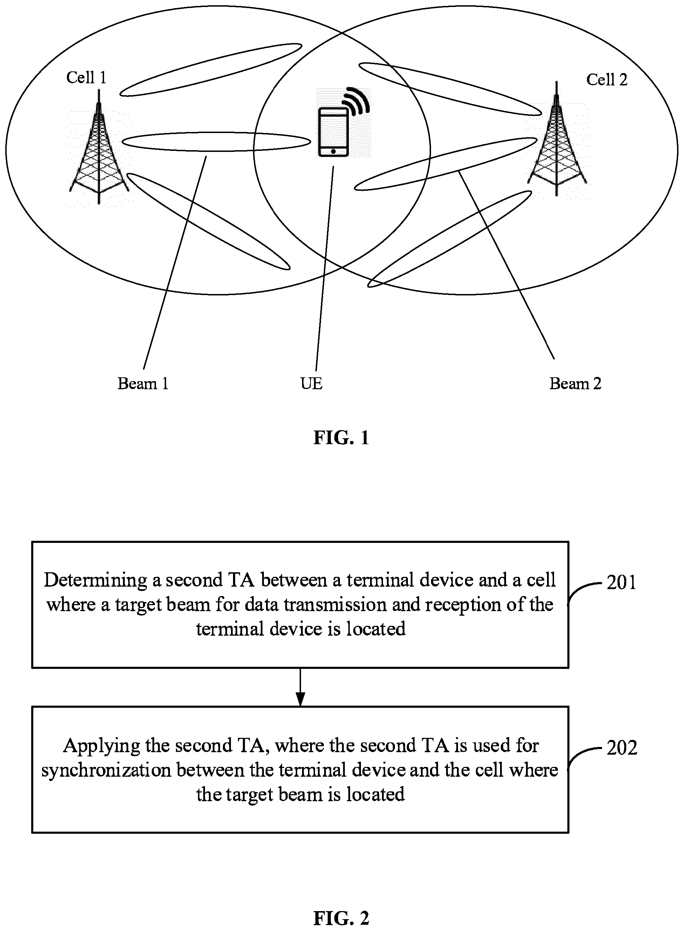

As shown in FIG. 1, the user equipment (UE) may transmit and receive data using a physical channel of Cell 2 while maintaining a connection with Cell 1. In case that the channel quality of UE in Cell 1 deteriorates, the network side device may hand over the data transmission and reception of the UE from Cell 1 to Cell 2 through downlink control information (DCI) or media access control-control element (MAC-CE).

When the UE uses the physical channel of Cell 2 to transmit and receive data, since the geographical locations of Cell 1 and Cell 2 may be different, the timing advance (TA) value between the UE and Cell 1 may be different from the TA value between the UE and Cell 2.

If the TA value for Cell 2 is obtained through random access, it will cause a large delay and reduce the efficiency of data transmission and reception for the UE.

Embodiments of the application provide TA based synchronization methods and apparatuses, and devices and a storage medium, by applying a second TA, a delay problem caused by obtaining the TA between the UE and the target cell using random access after the UE hands over its data transmission and reception to the target cell is solved, and the handover efficiency for the UE is improved, where the second TA is TA between the UE and the cell where the target beam for data transmission and reception of the UE is located.

The methods and the apparatuses are based on the same conception in the embodiments of the application. Since the principles of the methods and the apparatuses to solve the problems are similar, the implementation of the apparatuses and methods may be referred to each other, and the similar part is not repeated.

The solutions according to the embodiments of the application may be applicable to various systems, for example, 5G systems. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device, and may further include a core network part, such as an evolved packet system (EPS), a 5G system (5GS), and the like.

The terminal device in the embodiments of the application may be a device that provides voice and/or data connectivity to a user, a handheld device with a wireless connection function, or other processing devices connected to a wireless modem. In different systems, the names of the terminal device may be different. For example, in the 5G system, the terminal device may be called as a user equipment (UE). A wireless terminal device may communicate with one or more core networks (CNs) via a radio access network (RAN), and the wireless terminal device may be a mobile terminal device, such as a mobile phone (or cellular phone), a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the application.

The network device in the embodiments of the application may be a base station, and the base station may include multiple cells providing services for the terminal device. Depending on the specific scenario, the base station may be called an access point, or a device communicating with a wireless terminal device through one or more sectors on the air interface in the access network, or other names. The network device may be used for exchanging received air frames with internet protocol (IP) packets, and acting as a router between the wireless terminal device and the rest of the access network, where the rest of the access network may include an IP communication network. The network device may also coordinate attribute management for the air interface. For example, the network device in the embodiments of the application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the application. In some network structures, the network device may include a centralized unit (CU) node and a distributed unit (DU) node, and the centralized unit and the distributed unit may be geographically separated.

A network device and a terminal device may each use one or more antennas for multi input multi output (MIMO) transmission. MIMO transmission may be single user MIMO (SU-MIMO) or multi user MIMO (MU-MIMO). Depending on the state and number of antenna combinations, MIMO transmission may be 2D-MIMO, 3D-MIMO, FD-MIMO or massive-MIMO, or it may be diversity transmission, precoding transmission or beamforming transmission, etc.

FIG. 2 is a first schematic flowchart of a timing advance (TA) based synchronization method according to an embodiment of the application, where the TA based synchronization method may be applied to a terminal device, such as a user equipment (UE). As shown in FIG. 2, the TA based synchronization method includes the following steps:
step 201: determining a second TA between a terminal device and a cell where a target beam for data transmission and reception of the terminal device is located; and
step 202: applying the second TA, where the second TA is used for synchronization between the terminal device and the cell where the target beam is located.

For example, as shown in FIG. 1, in the inter-cell multiple transmitting receiving point (inter-cell mTRP) scenario, the current serving cell of the UE is always Cell 1, that is, the UE and the current serving cell are always connected (at media access control (MAC) layer and higher layer), that is, all signaling and data on the MAC layer and higher layer are borne by Cell 1. Depending on different cells where the target beams for data transmission and reception are located, the signaling and data transmitted from the current serving cell may use different physical channel resources for transmission at the physical layer, that is, the signaling and data are transmitted on the physical channel resources of the cell where the corresponding target beam is located. The cell where the target beam is located may be the current serving cell, namely Cell 1, or may be another cell different from the Cell 1. For example, when the target beam for the UE to transmit and receive data is in Cell 1, the UE uses the physical channel resources of Cell 1 to transmit and receive data. Similarly, if the target beam for the UE to transmit and receive data is in Cell 2, the UE uses the physical channel resources of Cell 2 to transmit and receive data. The TA between the UE and Cell 1 is the first TA, and the TA between the UE and Cell 2 is the second TA.

It should be noted that the current serving cell in the embodiments of the application refers to the cell that currently provides network services to the terminal device, namely the cell that currently provides the terminal device with MAC layer and higher layer control, and the current beam may refer to the beams currently used by the terminal device to transmit and receive data. The cell where the target beam is located is the cell where the beam would be used by the terminal device after the terminal device hands over its physical layer data transmission and reception is located. The cell where the target beam is located may be the current serving cell or other cells. The current serving cell and the current beam in subsequent embodiments are the same as this and are not repeated again.

It can be seen from the above embodiments that the terminal device determines the second TA between the terminal device and the cell where the target beam for data transmission and reception of the terminal device is located, and applies the second TA, where the second TA is used for synchronization between the terminal device and the cell where the target beam is located, to solve the delay problem caused by obtaining the TA between the terminal device and the target cell using random access after the terminal device hands over its data transmission and reception to the target cell, and improve the handover efficiency for the terminal device.

In an embodiment, applying the second TA includes:
receiving first indication information transmitted from a network side device, where the first indication information is used to indicate the terminal device to hand over from a current beam for data transmission and reception to the target beam; and
triggering to apply the second TA based on the first indication information.

In an embodiment, in case that the network side device determines to hand over the data transmission and reception on physical layer of the terminal device to the cell where the target beam is located, the network side device may transmit the first indication information to the terminal device. As such, the terminal device may determine, based on the first indication information, the target beam, and/or the cell corresponding to the target beam, and/or the second TA, etc., and then the terminal device may hand over its data transmission and reception to the target beam, and applies the second TA.

It can be seen from the above embodiments that after the terminal device receives the first indication information transmitted from the network side device, the terminal device hands over the current beam for data transmission and reception to the target beam based on the first indication information, and also triggers the application of the second TA, to achieve the synchronization between the terminal device and the cell where the target beam is located.

In an embodiment, determining the second TA between the terminal device and the cell where the target beam for data transmission and reception of the terminal device is located includes:
receiving first indication information transmitted from a network side device, where the first indication information is used to indicate the terminal device to hand over from a current beam for data transmission and reception to the target beam; and
determining, based on the first indication information, the second TA between the terminal device and the cell where the target beam for data transmission and reception of the terminal device is located.

For example, the network side device may use the first indication information to indicate the second TA. As such, the terminal device may determine the second TA based on the first indication information.

It can be seen from the above embodiments that the second TA may be determined based on the first indication information, which improves the efficiency of determining the second TA.

In an embodiment, the first indication information is first downlink control information (DCI) and/or first media access control-control element (MAC-CE).

For example, in case that the network side device uses the first indication information to indicate beam handover or the second TA, the beam handover or the second TA may be indicated through the first DCI and/or the first MAC-CE.

It can be seen from the above embodiments that the first indication information may be the first DCI, the first MAC-CE, or the first DCI and the first MAC-CE, which enriches the implementation of the first indication information and improves the reliability of indicating by the first indication information.

In an embodiment, the first indication information includes one or more of the following:
TA of the cell where the target beam is located;
a difference of the TA of the cell where the target beam is located relative to TA of a current serving cell of the terminal device;
a difference of the TA of the cell where the target beam is located relative to TA of a cell where the current beam is located;
an indication indicating that a TA difference is based on the current serving cell;
an indication indicating that a TA difference is based on the cell where the current beam is located;
a physical cell identifier (PCI) of the cell where the target beam is located;
a transmission configuration indication (TCI) state identifier corresponding to the target beam;
a beam index corresponding to the target beam;
a band width part (BWP) identifier associating with the cell where the target beam is located;
an index of the cell where the target beam is located;
an indication identifier triggering the terminal device to apply the second TA;
an indication indicating that the second TA of the cell where the target beam is located is the same as the TA of the current serving cell; or
an indication indicating that the second TA of the cell where the target beam is located is the same as the TA of the cell where the current beam is located.

In an embodiment, the TA based synchronization method further includes:
receiving first configuration information transmitted from the network side device, where the first configuration information is used to indicate the second TA;
where determining the second TA between the terminal device and the cell where the target beam for data transmission and reception of the terminal device is located includes:
   determining the second TA based on the first configuration information.

In an embodiment, in case that the network side device pre-configures candidate cells, the network side device may pre-configure in advance the TA value corresponding to the cell where each of the candidate target beams is located. For example, the current serving cell transmits first configuration information to the terminal device, where the first configuration information is used to pre-configure the terminal device with the TA value corresponding to the cell where each of the candidate target beams is located. As such, the terminal device may determine the second TA based on the first configuration information.

It can be seen from the above embodiments that the second TA may be determined based on the first configuration information, which enriches the implementation manner of determining the second TA and improves the reliability of determining the second TA.

In an embodiment, the first configuration information is any one of a first radio resource control (RRC) message, second DCI, or a second MAC-CE.

In an embodiment, in case that the network side device uses the first configuration information to indicate the second TA, the network side device may indicate the second TA through any one of the first RRC message, the second DCI, or the second MAC-CE.

It can be seen from the above embodiments that the first configuration information may be any one of the first RRC message, the second DCI or the second MAC-CE, which enriches the implementation of the first configuration information and improves the reliability of indicating by the first configuration information.

In an embodiment, the first configuration information includes one or more of the following:
an indication indicating that a TA difference is based on the current serving cell of the terminal device;
an indication indicating that a TA difference is based on the cell where the current beam is located;
a list of TA values of a cell where a candidate target beam is located;
a list of TA differences between a TA value of the cell where the target beam is located and a TA value of the current serving cell of the terminal device;
a list of TA differences between the TA value of the cell where the target beam is located and a TA value of the cell where the current beam is located;
a list of PCIs of the cell where the candidate target beam is located;
a list of TCI state identifiers corresponding to the candidate target beam;
a list of beam indexes corresponding to the candidate target beam;
a list of BWP identifiers associating with the cell where the candidate target beam is located;
a list of indexes of the cell where the candidate target beam is located;
an indication indicating that the second TA of the cell where the candidate target beam is located is the same as the TA of the current serving cell; or
an indication indicating that the second TA of the cell where the candidate target beam is located is the same as the TA of the cell where the current beam is located.

In an embodiment, the TA based synchronization method further includes:
receiving second configuration information transmitted from the network side device, where the second configuration information includes one or more of the following:
sounding reference signal (SRS) configuration information;
uplink data scheduling configuration information;
a list of downlink reference signal configuration information corresponding to a current serving cell of the terminal device and a cell where a candidate target beam is located;
a list of PCIs of the cell where the candidate target beam is located;
a list of TCI state identifiers corresponding to the candidate target beam;
a list of beam indexes corresponding to the candidate target beam;
a list of BWP identifiers associating with the cell where the candidate target beam is located; or
a list of indexes of the cell where the candidate target beam is located.

In an embodiment, the network side device may maintain the TA value between the terminal device and the current serving cell, and/or the TA value between the terminal device and the cell where each of the candidate target beams is located. For this purpose, the network side device may transmit the second configuration information to the terminal device.

For example, in case that the network side device needs to measure the uplink transmission from the terminal device to adjust the TA value, the second configuration information may carry uplink reference signal SRS configuration information and/or uplink data scheduling configuration information. As such, the terminal device may perform uplink signal/data transmission based on the configuration information.

For another example, in case that the network side device needs to adjust the TA value based on the measurement results reported from the terminal device, the second configuration information may carry the list of downlink reference signal configuration information corresponding to the current serving cell and the cell where the candidate target beam is located. As such, the terminal device may measure the downlink reference signals.

As may be seen from the above embodiments, the network side device may adjust the TA value between the terminal device and the current serving cell and/or the TA value of the terminal device and the cell where each of the candidate target beams is located based on the second configuration information, which improves the accuracy of TA maintenance.

In an embodiment, the second configuration information is any one of a second RRC message, third DCI, or a third MAC-CE.

In an embodiment, in case that the network side device uses the second configuration information to adjust the TA, any one of the second RRC message, the third DCI, or the third MAC-CE may be used as the second configuration information.

It can be seen from the above embodiments that the second configuration information may be any one of the second RRC message, the third DCI or the third MAC-CE, which enriches the implementation of the second configuration information and improves the reliability of indicating by the second configuration information.

In an embodiment, the TA based synchronization method further includes:
performing uplink signal transmission or uplink data transmission based on the SRS configuration information and/or uplink data scheduling configuration information, to make the network side device measure the uplink signal or the uplink data and determine, based on a measurement result, the TA value between the terminal device and the current serving cell and/or the TA value between the terminal device and the cell where the candidate target beam is located.

In an embodiment, in case that the network side device needs to measure the uplink transmission from the terminal device to adjust the TA value, the terminal device may perform uplink signal transmission or uplink data transmission based on the SRS configuration information and/or uplink data scheduling configuration information in the second configuration information.

It can be seen from the above embodiments that by performing uplink signal transmission or uplink data transmission based on the SRS configuration information and/or uplink data scheduling configuration information, it may be achieved that the network side device needs to measure the uplink transmission from the terminal device to adjust the TA value, which helps to improve the reliability of TA maintenance.

In an embodiment, the TA based synchronization method further includes:
measuring a downlink reference signal transmitted from the network side device based on the list of downlink reference signal configuration information corresponding to the current serving cell and the cell where the candidate target beam is located,
where measuring the downlink reference signal transmitted from the network side device includes one or more of the following:
   measuring a reception time of each of the downlink reference signals in the list of downlink reference signal configuration information;
   measuring a reception time difference of each of the downlink reference signals relative to the cell where the current beam is located; or
   measuring a reception time difference of each of the downlink reference signals relative to the current serving cell.

In an embodiment, in case that the network side device needs to adjust the TA value based on the measurement result reported from the terminal device, the terminal device may perform downlink signal measurement based on the list of downlink reference signal configuration information in the second configuration information.

It can be seen from the above embodiments that by measuring the downlink reference signal based on the list of downlink reference signal configuration information corresponding to the current serving cell and the cell where the candidate target beam is located, it may be achieved that the network side device needs to adjust the TA value based on the measurement result reported from the terminal device, which helps to improve the reliability of TA maintenance.

In an embodiment, the TA based synchronization method further includes:
transmitting second indication information to the network side device, where the second indication information includes one or more of the following:
a list of reception time of each of the downlink reference signals;
a list of reception time differences relative to the cell where the current beam is located;
a list of reception time differences relative to the current serving cell;
an indication indicating that the reception time difference is based on the current serving cell;
an indication indicating that the reception time difference is based on the cell where the current beam is located;
a list of PCIs of the cell where the candidate target beam is located;
a list of TCI state identifiers corresponding to the candidate target beam;
a list of beam indexes corresponding to the candidate target beam;
a list of BWP identifiers associating with the cell where the candidate target beam is located; or
a list of indexes of the cell where the candidate target beam is located.

In an embodiment, the second indication information may include the measurement result obtained after the terminal device performs downlink signal measurement.

It can be seen from the above embodiments that by transmitting the second indication information to the network side device, the network side device may obtain the measurement result from the second indication information, where the measurement result is obtained by the terminal device after the terminal device measures the downlink signal, and then the network side device may adjust the TA value based on the measurement result, which improves the efficiency of TA maintenance.

In an embodiment, the second TA is determined based on the TA difference indicated by the current serving cell and the TA value of the current serving cell and/or based on the TA difference indicated by the cell where the current beam is located and the TA value of the cell where the current beam is located.

In an embodiment, if the first indication information includes the TA difference or the first configuration information includes the TA difference, the second TA may be calculated based on the TA difference and the TA value of the corresponding cell.

For example, in case that the TA difference is the TA difference relative to the current serving cell, the terminal device may calculate the second TA based on the TA value of the current serving cell; or
in case that the TA difference is the TA difference relative to the cell where the current beam is located, the terminal device may calculate the second TA based on the TA value of the cell where the current beam is located.

It can be seen from the above embodiments that the second TA may be calculated based on the TA difference and the TA value of the corresponding cell, which improves the efficiency of determining the second TA.

In an embodiment, the TA based synchronization method further includes:
maintaining first TA, where the first TA is TA between the terminal device and the current serving cell of the terminal device.

In an embodiment, the terminal device may maintain the first TA while applying the second TA. Once the beam used by the terminal device for transmitting and receiving data is handed over to a beam of the current serving cell, the terminal device may directly apply the previously maintained first TA.

It can be seen from the above embodiments that the terminal device may maintain the first TA while applying the second TA. In this way, once the beam used by the terminal device for transmitting and receiving data is handed over to a beam of the current serving cell, the first TA may be directly applied, which further improves the efficiency of data transmitting and receiving by the terminal device.

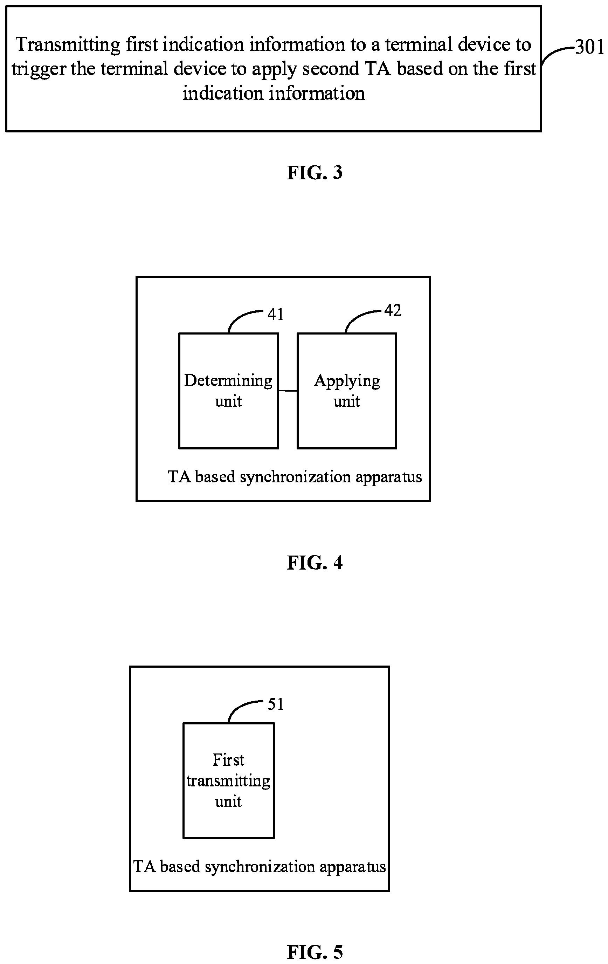

FIG. 3 is a second schematic flowchart of a timing advance (TA) based synchronization method according to an embodiment of the application, where the TA based synchronization method is applied to a network side device. As shown in FIG. 3, the TA based synchronization method includes the following steps.

Step 301: transmitting first indication information to a terminal device to trigger the terminal device to apply second TA based on the first indication information.

For example, as shown in FIG. 1, in the inter-cell multiple transmitting receiving point (inter-cell mTRP) scenario, the current serving cell of the user equipment (UE) is always Cell 1, that is, the UE and the current serving cell are always connected (at media access control (MAC) layer and higher layer), that is, all signaling and data on the MAC layer and higher layer are borne by Cell 1. Depending on different cells where the target beams for data transmission and reception are located, the signaling and data transmitted from the current serving cell may use different physical channel resources for transmission at the physical layer, that is, the signaling and data are transmitted corresponding to the physical channel resources of the cell where the target beam is located. The cell where the target beam is located may be the current serving cell, namely Cell 1, or may be another cell different from the Cell 1. For example, when the target beam for the UE to transmit and receive data is in Cell 1, the UE uses the physical channel resources of Cell 1 to transmit and receive data. Similarly, if the target beam for the UE to transmit and receive data is in Cell 2, the UE uses the physical channel resources of Cell 2 to transmit and receive data. The TA between the UE and Cell 1 is the first TA, and the TA between the UE and Cell 2 is the second TA.

In case that the network side device determines to hand over the data transmission and reception on physical layer of the terminal device to the cell where the target beam is located, the network side device transmits the first indication information to the terminal device. As such, the terminal device may determine, based on the first indication information, the target beam, and/or the cell corresponding to the target beam, and/or the second TA, etc., and then the terminal device may hand over its data transmission and reception to the target beam, and applies the second TA.

It can be seen from the above embodiments that the network side device transmits the first indication information to the terminal device, and then the terminal device is triggered to apply the second TA based on the first indication information, where the second TA is TA between the terminal device and a cell where a target beam for the terminal device to transmit and receive data is located. As such, a delay problem caused by obtaining the TA between the terminal device and the target cell using random access after the terminal device hands over its data transmission and reception to the target cell, and the handover efficiency for the terminal device is improved.

In an embodiment, the first indication information is further used to indicate the second TA.

For example, the network side device may use the first indication information to indicate the second TA, and then the terminal device may determine the second TA based on the first indication information.

It can be seen from the above embodiments that the second TA may be determined based on the first indication information, which improves the efficiency of determining the second TA.

In an embodiment, the first indication information is first downlink control information (DCI) and/or first media access control-control element (MAC-CE).

For example, in case that the network side device uses the first indication information to indicate beam handover or the second TA, the beam handover or the second TA may be indicated through the first DCI and/or the first MAC-CE.

It can be seen from the above embodiments that the first indication information may be the first DCI, the first MAC-CE, or the first DCI and the first MAC-CE, which enriches the implementation of the first indication information and improves the reliability of indicating by the first indication information.

In an embodiment, the first indication information includes one or more of the following:
TA of the cell where the target beam is located;
a difference of the TA of the cell where the target beam is located relative to TA of a current serving cell of the terminal device;
a difference of the TA of the cell where the target beam is located relative to TA of a cell where the current beam is located;
an indication indicating that a TA difference is based on the current serving cell;
an indication indicating that a TA difference is based on the cell where the current beam is located;
a physical cell identifier (PCI) of the cell where the target beam is located;
a transmission configuration indication (TCI) state identifier corresponding to the target beam;
a beam index corresponding to the target beam;
a band width part (BWP) identifier associating with the cell where the target beam is located;
an index of the cell where the target beam is located;
an indication identifier triggering the terminal device to apply the second TA;
an indication indicating that the second TA of the cell where the target beam is located is the same as the TA of the current serving cell; or
an indication indicating that the second TA of the cell where the target beam is located is the same as the TA of the cell where the current beam is located.

In an embodiment, the TA based synchronization method further includes:
transmitting first configuration information to the terminal device, where the first configuration information is used to indicate the second TA.

In an embodiment, in case that the network side device pre-configures candidate cells, the network side device may pre-configure in advance the TA value corresponding to the cell where each of the candidate target beams is located. For example, the current serving cell transmits first configuration information to the terminal device, where the first configuration information is used to pre-configure the terminal device with the TA value corresponding to the cell where each of the candidate target beams is located. As such, the terminal device may determine the second TA based on the first configuration information.

It can be seen from the above embodiments that the second TA may be determined based on the first configuration information, which enriches the implementation manner of determining the second TA and improves the reliability of determining the second TA.

In an embodiment, the first configuration information is any one of a first radio resource control (RRC) message, second DCI, or a second MAC-CE.

In an embodiment, in case that the network side device uses the first configuration information to indicate the second TA, the network side device may indicate the second TA through any one of the first RRC message, the second DCI, or the second MAC-CE.

It can be seen from the above embodiments that the first configuration information may be any one of the first RRC message, the second DCI or the second MAC-CE, which enriches the implementation of the first configuration information and improves the reliability of indicating by the first configuration information.

In an embodiment, the first configuration information includes one or more of the following:
an indication indicating that a TA difference is based on the current serving cell of the terminal device;
an indication indicating that a TA difference is based on the cell where the current beam is located;
a list of TA values of the cell where the candidate target beam is located;
a list of TA differences between a TA value of the cell where the target beam is located and a TA value of the current serving cell of the terminal device;
a list of TA differences between the TA value of the cell where the target beam is located and a TA value of the cell where the current beam is located;
a list of PCIs of the cell where the candidate target beam is located;
a list of TCI state identifiers corresponding to the candidate target beam;
a list of beam indexes corresponding to the candidate target beam;
a list of BWP identifiers associating with the cell where the candidate target beam is located;
a list of indexes of the cell where the candidate target beam is located;
an indication indicating that the second TA of the cell where the candidate target beam is located is the same as the TA of the current serving cell; or
an indication indicating that the second TA of the cell where the candidate target beam is located is the same as the TA of the cell where the current beam is located.

In an embodiment, the TA based synchronization method further includes:
transmitting second configuration information to the terminal device, where the second configuration information includes one or more of the following:
sounding reference signal (SRS) configuration information;
uplink data scheduling configuration information;
a list of downlink reference signal configuration information corresponding to a current serving cell of the terminal device and a cell where a candidate target beam is located;
a list of PCIs of the cell where the candidate target beam is located;
a list of TCI state identifiers corresponding to the candidate target beam;
a list of beam indexes corresponding to the candidate target beam;
a list of BWP identifiers associating with the cell where the candidate target beam is located; or
a list of indexes of the cell where the candidate target beam is located.

In an embodiment, the network side device may maintain the TA value between the terminal device and the current serving cell, and/or the TA value between the terminal device and the cell where each of the candidate target beams is located. For this purpose, the network side device may transmit the second configuration information to the terminal device.

For example, in case that the network side device needs to measure the uplink transmission from the terminal device to adjust the TA value, the second configuration information may carry uplink reference signal SRS configuration information and/or uplink data scheduling configuration information. As such, the terminal device may perform uplink signal/data transmission based on the configuration information.

For another example, in case that the network side device needs to adjust the TA value based on the measurement results reported from the terminal device, the second configuration information may carry the list of downlink reference signal configuration information corresponding to the current serving cell and the cell where the candidate target beam is located. As such, the terminal device may measure the downlink reference signals.

As may be seen from the above embodiments, the network side device may adjust the TA value between the terminal device and the current serving cell and/or the TA value of the terminal device and the cell where each of the candidate target beams is located based on the second configuration information, which improves the accuracy of TA maintenance.

In an embodiment, the second configuration information is any one of a second RRC message, third DCI, or a third MAC-CE.

In an embodiment, in case that the network side device uses the second configuration information to adjust the TA, any one of the second RRC message, the third DCI, or the third MAC-CE may be used as the second configuration information.

It can be seen from the above embodiments that the second configuration information may be any one of the second RRC message, the third DCI or the third MAC-CE, which enriches the implementation of the second configuration information and improves the reliability of indicating by the second configuration information.

In an embodiment, the TA based synchronization method further includes:
measuring uplink signal or uplink data transmitted from the terminal device based on the SRS configuration information and/or uplink data scheduling configuration information, and determining, based on a measurement result, the TA value between the terminal device and the current serving cell and/or the TA value between the terminal device and the cell where the candidate target beam is located,
where measuring the uplink signal or uplink data transmitted from the terminal device includes one or more of the following:
   measuring the TA value between the terminal device and the current serving cell and/or the TA value between the terminal device and the cell where the candidate target beam is located;
   measuring a TA difference of the TA value of the cell where the candidate target beam is located relative to the TA value of the current serving cell; or
   measuring a TA difference of the TA value of the cell where the candidate target beam is located relative to a TA value of a cell where the current beam is located.

In an embodiment, in case that the network side device needs to measure the uplink transmission from the terminal device to adjust the TA value, the terminal device may perform uplink signal transmission or uplink data transmission based on the SRS configuration information and/or uplink data scheduling configuration information in the second configuration information.

It can be seen from the above embodiments that by performing uplink signal transmission or uplink data transmission based on the SRS configuration information and/or uplink data scheduling configuration information, it may be achieved that the network side device needs to measure the uplink transmission from the terminal device to adjust the TA value, which helps to improve the reliability of TA maintenance.

In an embodiment, the TA based synchronization method further includes:
receiving second indication information transmitted from the terminal device;
determining, based on the second indication information, the TA value between the terminal device and the current serving cell and/or the TA value between the terminal device and the cell where the candidate target beam is located,
where the second indication information includes one or more of the following:
   a list of reception time of each of the downlink reference signals in the downlink reference signal configuration information list;
   a list of reception time differences relative to the cell where the current beam is located;
   a list of reception time differences relative to the current serving cell;
   an indication indicating that the reception time difference is based on the current serving cell;
   an indication indicating that the reception time difference is based on the cell where the current beam is located;
   a list of PCIs of the cell where the candidate target beam is located;
   a list of TCI state identifiers corresponding to the candidate target beam;
   a list of beam indexes corresponding to the candidate target beam;
   a list of BWP identifiers associating with the cell where the candidate target beam is located; or
   a list of indexes of the cell where the candidate target beam is located.

It can be seen from the above embodiments that by receiving the second indication information transmitted from the terminal device, the network side device may obtain the measurement result from the second indication information, where the measurement result is obtained by the terminal device after the terminal device measures the downlink signal, and then the network side device may adjust the TA value based on the measurement result, which improves the efficiency of TA maintenance.

The following three examples are used to illustrate the implementation of the above TA based synchronization method.

Example 1: The network side device maintains the TA value between the UE and the current serving cell and/or the TA value between the UE and the cell where each of the candidate target beams is located.

Scenario 1: The network side device measures the uplink transmission from the UE to adjust the TA value.

1-1. The current serving cell transmits the second configuration information to the UE. The second configuration information is used to pre-configure uplink association configuration to the UE. The second configuration information carries:
uplink SRS configuration information; and/or
uplink data scheduling configuration information.

1-2. The UE performs uplink signal/data transmission based on the second configuration information in 1-1.

1-3. The current serving cell and the cell where the candidate target beam is located measure and obtain, based on the pre-configured uplink association configuration information, the TA between the cell where the candidate target beam is located and the UE, and/or the TA difference of the TA value of the cell where the candidate target beam is located relative to the TA value of the current serving cell, and/or the TA difference of the TA value of the cell where the candidate target beam is located relative to a TA value of a cell where the current beam is located.

Scenario 2: The network side device adjusts the TA value based on the measurement results reported from the UE.

2-1. The current serving cell transmits the second configuration information to the UE. The second configuration information is used to indicate to the UE the downlink reference signal configuration information corresponding to the current serving cell and the cell where the candidate target beam is located, where the second configuration information carries:
a list of downlink reference signal configuration information corresponding to the current serving cell and the cell where the candidate target beam is located; and/or
a list of PCIs of the cell where the candidate target beam is located; and/or
a list of TCI state identifiers corresponding to the candidate target beam; and/or
a list of beam indexes corresponding to the candidate target beam; and/or
a list of BWP identifiers associating with the cell where the candidate target beam is located; and/or
a list of indexes of the cell where the candidate target beam is located.

The current serving cell and the cell where the candidate target beam is located perform downlink reference signal transmission based on the downlink reference signal configuration information pre-configured for the UE.

2-2. The UE measures the reception time of each of the downlink reference signals, and/or the reception time difference of each of the downlink reference signals relative to the cell where the beam for the current data transmission and reception is located, and/or the reception time difference of each of the downlink reference signals relative to the current serving cell.

2-3. The UE reports the measurement results in 2-2 to the network side device by transmitting second indication information, where the second indication information includes at least one of the following:
a list of reception time of each of the reference signals;
a list of reception time differences of the reception time of each of the downlink reference signals relative to the cell where the beam for the current data transmission and reception is located;
a list of reception time differences of the reception time of each of the downlink reference signals relative to the current serving cell;
an indication indicating that the reception time difference is based on the current serving cell;
an indication indicating that the reception time difference is based on the cell where the current beam is located;
a list of PCIs of the cell where the candidate target beam is located;
a list of TCI state identifiers corresponding to the candidate target beam;
a list of beam indexes corresponding to the candidate target beam;
a list of BWP identifiers associating with the cell where the candidate target beam is located; or
a list of indexes of the cell where the candidate target beam is located.

2-4. The network side device adjusts the TA value between the UE and the current serving cell and/or the TA value between the UE and the cell where each of the candidate target beams is located based on the list of reception time and/or list of reception time differences for each of the reference signals reported from the UE.

Example 2: In case that the network side device preconfigures the candidate cell, the network side device preconfigures the TA value of the cell where the candidate target beam is located in advance.

3-1. In an embodiment, based on the Example 1, the network side device obtains the TA value between the UE and the current serving cell and/or the TA value between the UE and the cell where each of the candidate target beams is located.

3-2. The current serving cell transmits the first configuration information to the UE. The first configuration information is used to pre-configure the UE with the TA value corresponding to the cell where each of the candidate target beams is located;
the first configuration information may be an RRC reconfiguration message, or DCI, or MAC-CE, etc.;
the first configuration information carries at least one of the following:
   an indication indicating that a TA difference is based on the current serving cell;
   an indication indicating that a TA difference is based on the cell where the current beam is located;
   a list of TA values of the cell where the candidate target beam is located;
   a list of TA differences between the TA value of the cell where the target beam is located and the TA value of the current serving cell;
   a list of TA differences between the TA value of the cell where the target beam is located and a TA value of the cell where the current beam is located;
   a list of PCIs of the cell where the candidate target beam is located;
   a list of TCI state identifiers corresponding to the candidate target beam;
   a list of beam indexes corresponding to the candidate target beam;
   a list of BWP identifiers associating with the cell where the candidate target beam is located; or
   a list of indexes of the cell where the candidate target beam is located.

3-3. In case that the network side device determines to hand over the data transmission of the UE to the target beam, the network side device transmits the first indication information to the UE. The first indication information is DCI and/or MAC-CE.

The first indication information includes at least one of the following:
TA of the cell where the target beam is located;
a PCI of the cell where the target beam is located;
a TCI state identifier corresponding to the target beam;
a beam index corresponding to the target beam;
a BWP identifier associating with the cell where the target beam is located;
an index of the cell where the target beam is located;
an indication identifier triggering the UE to apply the second TA;
an indication indicating that the second TA of the cell where the target beam is located is the same as the TA of the current serving cell; or
an indication indicating that the second TA of the cell where the target beam is located is the same as the TA of the cell where the current beam is located.

3-4. Based on the first indication information in 3-3, the UE determines the target beam, and/or the cell corresponding to the target beam, and/or the second TA, where the second TA is TA between the UE and the cell where the target beam for data transmission and reception of the UE is located;
for a case where the second TA association information transmitted from the network side device is a TA difference relative to the current serving cell, the UE calculates the second TA based on the TA value of the current serving cell;
for a case where the second TA association information transmitted from the network side device is a TA difference relative to the cell where the current beam is located, the UE calculates the second TA based on the TA value of the cell where the current beam is located.

3-5. In an embodiment, the UE maintains the first TA while applying the second TA, the first TA is a value of TA between the UE and the current serving cell.

3-6. The UE hands over data transmission and reception to the target beam and applies the second TA value.

Example 3: The network side device carries the TA association information of the cell where the target beam is located in the L1/L2 handover command.

4-1. Based on the Example 1, the network side device obtains the TA value between the UE and the current serving cell and/or the TA value between the UE and the cell where each of the candidate target beams is located.

4-2. In case that the network side device determines to hand over the data transmission of the UE to the target beam, the network side device transmits the first indication information to the UE. The first indication information is DCI and/or MAC-CE. The first indication information includes at least one of the following:
TA value of the cell where the target beam is located;
a difference between the TA of the cell where the target beam is located and TA of a current serving cell;
a difference of the TA of the cell where the target beam is located relative to TA of a cell where the current beam is located;
an indication indicating that a TA difference is based on the current serving cell;
an indication indicating that a TA difference is based on the cell where the current beam is located;
a PCI of the cell where the target beam is located;
a TCI state identifier corresponding to the target beam;
a beam index corresponding to the target beam;
a BWP identifier associating with the cell where the target beam is located;
an index of the cell where the target beam is located; or
an indication identifier triggering the UE to apply the second TA.

4-3. Based on the first indication information in 4-2, the UE determines the target beam, and/or the cell corresponding to the target beam, and/or the second TA, where the second TA is TA between the UE and the cell where the target beam for data transmission and reception of the UE is located;
for a case where the second TA association information transmitted from the network side device is a TA difference relative to the current serving cell, the UE calculates the second TA based on the TA value of the current serving cell;
for a case where the second TA association information transmitted from the network side device is a TA difference relative to the cell where the current beam is located, the UE calculates the second TA based on the TA value of the cell where the current beam is located.

4-4. The UE hands over data transmission and reception to the target beam and applies the second TA value.

4-5. In an embodiment, the UE maintains the first TA while applying the second TA, where the first TA is value of TA between the UE and the current serving cell.

4-6. In an embodiment, based on 4-5, in case that the network side device determines to hand over the data transmission of the UE to the beam of the current serving cell, the network side device transmits the first indication information to the UE, where the first indication information is DCI, and/or MAC-CE. The first indication information includes at least one of the following:
a PCI of the cell where the target beam is located, i.e. the current serving cell;
a TCI state identifier corresponding to the target beam;
a beam index corresponding to the target beam;
a BWP identifier associating with the cell where the target beam is located, i.e. the current serving cell; or
an index of the cell where the target beam is located, i.e. the current serving cell.

4-7. In an embodiment, the UE hands over data transmission and reception to the target beam, that is, the beam of the current serving cell, and applies the previously maintained first TA value. The first TA is the TA between the UE and the current serving cell.

Another possible scenario based on Example 2 and Example 3 is as follows:
in case that the network side device indicates to the UE in the first configuration information or the first indication information that the TA value of the cell where the target beam to be handed over is located or the TA values of the cells where all candidate target beams are located is/are the same as the first TA value of the current serving cell, when the UE receives the first indication information transmitted from the network side device for indicating the UE to apply the second TA, the UE may continue to apply the first TA value.

FIG. 4 shows a timing advance (TA) based synchronization apparatus according to an embodiment of the application. The TA based synchronization apparatus is applied to a terminal device, and the apparatus may be used to perform the TA based synchronization method shown in FIG. 2. As shown in FIG. 4, the TA based synchronization apparatus includes:
a determining unit 41, used for determining a second TA between the terminal device and a cell where a target beam for data transmission and reception of the terminal device is located; and
an applying unit 42, used for applying the second TA, where the second TA is used for synchronization between the terminal device and the cell where the target beam is located.

In an embodiment, on the basis of the above apparatus, the applying unit 42 includes:
a first receiving sub-unit, used for receiving first indication information transmitted from a network side device, where the first indication information is used to indicate the terminal device to hand over from a current beam for data transmission and reception to the target beam; and
a triggering sub-unit, used for triggering to apply the second TA based on the first indication information.

In an embodiment, on the basis of the above apparatus, the determining unit 41 includes:
a second receiving sub-unit, used for receiving first indication information transmitted from a network side device, where the first indication information is used to indicate the terminal device to hand over from a current beam for data transmission and reception to the target beam; and
a first determining sub-unit, used for determining, based on the first indication information, the second TA between the terminal device and the cell where the target beam for data transmission and reception of the terminal device is located.

In an embodiment, on the basis of the above apparatus, the first indication information is first downlink control information (DCI) and/or first media access control-control element (MAC-CE).

In an embodiment, on the basis of the above apparatus, the first indication information includes one or more of the following:
TA of the cell where the target beam is located;
a difference of the TA of the cell where the target beam is located relative to TA of a current serving cell of the terminal device;
a difference of the TA of the cell where the target beam is located relative to TA of a cell where the current beam is located;
an indication indicating that a TA difference is based on the current serving cell;
an indication indicating that a TA difference is based on the cell where the current beam is located;
a physical cell identifier (PCI) of the cell where the target beam is located;
a transmission configuration indication (TCI) state identifier corresponding to the target beam;
a beam index corresponding to the target beam;
a band width part (BWP) identifier associating with the cell where the target beam is located;
an index of the cell where the target beam is located;
an indication identifier triggering the terminal device to apply the second TA;
an indication indicating that the second TA of the cell where the target beam is located is the same as the TA of the current serving cell; or
an indication indicating that the second TA of the cell where the target beam is located is the same as the TA of the cell where the current beam is located.

In an embodiment, on the basis of the above apparatus, the TA based synchronization apparatus may further include:
a first receiving unit, used for receiving first configuration information transmitted from a network side device, where the first configuration information is used to indicate the second TA;
where the determining unit 41 includes:
   a second determining sub-unit, used for determining the second TA based on the first configuration information.

In an embodiment, on the basis of the above apparatus, the first configuration information is any one of a first radio resource control (RRC) message, second downlink control information (DCI), or a second media access control-control element (MAC-CE)

In an embodiment, on the basis of the above apparatus, the first configuration information includes one or more of the following:
an indication indicating that a TA difference is based on a current serving cell of the terminal device;
an indication indicating that a TA difference is based on a cell where a current beam is located;
a list of TA values of a cell where candidate target beam is located;
a list of TA differences between a TA value of the cell where the target beam is located and a TA value of the current serving cell of the terminal device;
a list of TA differences between the TA value of the cell where the target beam is located and a TA value of the cell where the current beam is located;
a list of PCIs of the cell where the candidate target beam is located;
a list of TCI state identifiers corresponding to the candidate target beam;
a list of beam indexes corresponding to the candidate target beam;
a list of BWP identifiers associating with the cell where the candidate target beam is located;
a list of indexes of the cell where the candidate target beam is located;
an indication indicating that the second TA of the cell where the candidate target beam is located is the same as the TA of the current serving cell; or
an indication indicating that the second TA of the cell where the candidate target beam is located is the same as the TA of the cell where the current beam is located.

In an embodiment, on the basis of the above apparatus, the TA based synchronization apparatus may further include:
a second receiving unit, used for receiving second configuration information transmitted from a network side device, where the second configuration information includes one or more of the following:
sounding reference signal (SRS) configuration information;
uplink data scheduling configuration information;
a list of downlink reference signal configuration information corresponding to a current serving cell of the terminal device and a cell where a candidate target beam is located;
a list of PCIs of the cell where the candidate target beam is located;
a list of TCI state identifiers corresponding to the candidate target beam;
a list of beam indexes corresponding to the candidate target beam;
a list of BWP identifiers associating with the cell where the candidate target beam is located; or
a list of indexes of the cell where the candidate target beam is located.

In an embodiment, on the basis of the above apparatus, the second configuration information is any one of a second RRC message, third DCI, or a third MAC-CE.

In an embodiment, on the basis of the above apparatus, the TA based synchronization apparatus may further include:
an uplink transmission unit, used for performing uplink signal transmission or uplink data transmission based on the SRS configuration information and/or uplink data scheduling configuration information, to make the network side device measure the uplink signal or the uplink data and determine, based on a measurement result, a TA value between the terminal device and the current serving cell and/or a TA value between the terminal device and the cell where the candidate target beam is located.

In an embodiment, on the basis of the above apparatus, the TA based synchronization apparatus may further include:
a downlink measuring unit, used for measuring a downlink reference signal transmitted from the network side device based on the list of downlink reference signal configuration information corresponding to the current serving cell and the cell where the candidate target beam is located,
where measuring the downlink reference signal transmitted from the network side device includes one or more of the following:
   measuring a reception time of each of downlink reference signals in the list of downlink reference signal configuration information;
   measuring a reception time difference of each of the downlink reference signals relative to the cell where the current beam is located; or
   measuring a reception time difference of each of the downlink reference signals relative to the current serving cell.

In an embodiment, on the basis of the above apparatus, the TA based synchronization apparatus may further include:
an indication information transmitting unit, used for transmitting second indication information to the network side device, where the second indication information includes one or more of the following:
a list of reception time of each of the downlink reference signals;
a list of reception time differences relative to the cell where the current beam is located;
a list of reception time differences relative to the current serving cell;
an indication indicating that a reception time difference is based on the current serving cell;
an indication indicating that a reception time difference is based on the cell where the current beam is located;
a list of PCIs of the cell where the candidate target beam is located;
a list of TCI state identifiers corresponding to the candidate target beam;
a list of beam indexes corresponding to the candidate target beam;
a list of BWP identifiers associating with the cell where the candidate target beam is located; or
a list of indexes of the cell where the candidate target beam is located.

In an embodiment, on the basis of the above apparatus, the second TA is determined based on a TA difference indicated by the current serving cell and the TA value of the current serving cell and/or based on a TA difference indicated by the cell where the current beam is located and the TA value of the cell where the current beam is located.

In an embodiment, on the basis of the above apparatus, the TA based synchronization apparatus may further include:
a maintaining unit, used for maintaining first TA, where the first TA is TA between the terminal device and the current serving cell of the terminal device.

FIG. 5 shows a timing advance (TA) based synchronization apparatus according to an embodiment of the application. The TA based synchronization apparatus is applied to a network side device, and the apparatus may be used to perform the TA based synchronization method shown in FIG. 3. As shown in FIG. 5, the TA based synchronization apparatus includes:
a first transmitting unit 51, used for transmitting first indication information to a terminal device to trigger the terminal device to apply second TA based on the first indication information,
where the second TA is TA between the terminal device and a cell where a target beam for data transmission and reception of the terminal device is located; and
the first indication information is used to indicate the terminal device to hand over from a current beam for data transmission and reception to the target beam.

In an embodiment, on the basis of the above apparatus, the TA based synchronization apparatus may further include:
a second transmitting unit, used for transmitting first configuration information to the terminal device, where the first configuration information is used to indicate the second TA.

In an embodiment, on the basis of the above apparatus, the first configuration information is any one of a first radio resource control (RRC) message, second downlink control information (DCI), or a second media access control-control element (MAC-CE).

In an embodiment, on the basis of the above apparatus, the TA based synchronization apparatus may further include:
a third transmitting unit, used for transmitting second configuration information to the terminal device, where the second configuration information includes one or more of the following:
sounding reference signal (SRS) configuration information;
uplink data scheduling configuration information;
a list of downlink reference signal configuration information corresponding to a current serving cell of the terminal device and a cell where a candidate target beam is located;
a list of PCIs of the cell where the candidate target beam is located;
a list of TCI state identifiers corresponding to the candidate target beam;
a list of beam indexes corresponding to the candidate target beam;
a list of band width part (BWP) identifiers associating with the cell where the candidate target beam is located; or
a list of indexes of the cell where the candidate target beam is located.

In an embodiment, on the basis of the above apparatus, the second configuration information is any one of a second RRC message, third DCI, or a third MAC-CE.

In an embodiment, on the basis of the above apparatus, the TA based synchronization apparatus may further include:
a TA measuring unit, used for measuring uplink signal or uplink data transmitted from the terminal device based on the SRS configuration information and/or uplink data scheduling configuration information, and determining, based on a measurement result, a TA value between the terminal device and the current serving cell and/or a TA value between the terminal device and the cell where the candidate target beam is located,
where measuring the uplink signal or uplink data transmitted from the terminal device includes one or more of the following:
   measuring the TA value between the terminal device and the current serving cell and/or the TA value between the terminal device and the cell where the candidate target beam is located;
   measuring a TA difference of the TA value of the cell where the candidate target beam is located relative to the TA value of the current serving cell; or
   measuring a TA difference of the TA value of the cell where the candidate target beam is located relative to a TA value of a cell where the current beam is located.

In an embodiment, on the basis of the above apparatus, the TA based synchronization apparatus may further include:
an indication information receiving unit, used for receiving second indication information transmitted from the terminal device;
a TA determining unit, used for determining, based on the second indication information, the TA value between the terminal device and the current serving cell and/or the TA value between the terminal device and the cell where the candidate target beam is located,
where the second indication information includes one or more of the following:
   a list of reception time of each of the downlink reference signals in the downlink reference signal configuration information list;
   a list of reception time differences relative to the cell where the current beam is located;
   a list of reception time differences relative to the current serving cell;
   an indication indicating that a reception time difference is based on the current serving cell;
   an indication indicating that a reception time difference is based on the cell where the current beam is located;
   a list of PCIs of the cell where the candidate target beam is located;
   a list of TCI state identifiers corresponding to the candidate target beam;
   a list of beam indexes corresponding to the candidate target beam;
   a list of BWP identifiers associating with the cell where the candidate target beam is located; or
   a list of indexes of the cell where the candidate target beam is located.

It should be noted that, the division of units in the embodiments of the application is schematic, and is only a logical function division, and there may be other division manners in actual implementation. In addition, the functional units in the various embodiments of the application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the solutions of the application in essence or a part of the solutions that contributes to the related art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the application. The storage medium described above includes various media that may store program codes, such as USB flash disk, mobile hard disk, read-only memory (ROM), random access memory (RAM), magnetic disk, or optical disk.

The above apparatus according to the embodiments of the application is able to perform all the method steps in the above-mentioned method embodiments, and achieve the same effect. The same parts and beneficial effects as the method embodiments are not repeated here.

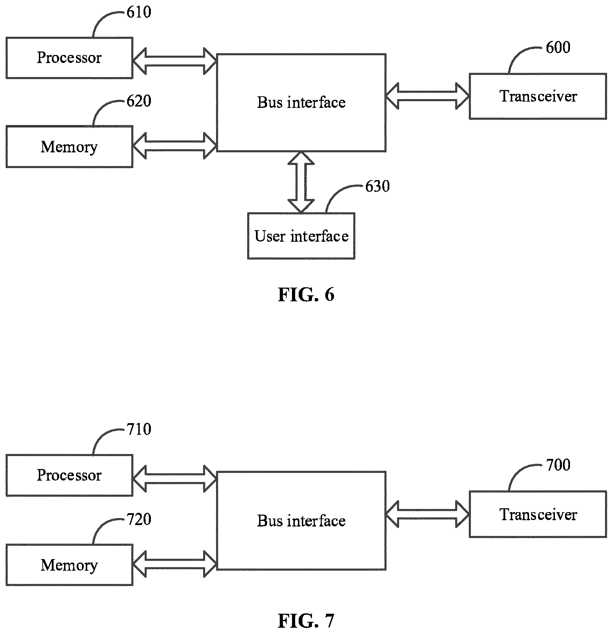

FIG. 6 is a schematic structural diagram of a terminal device according to an embodiment of the application. The terminal device may be used to perform the TA based synchronization method shown in FIG. 2. As shown in FIG. 6, the transceiver 600 is used for receiving and transmitting data under control of processor 610. In FIG. 6, a bus architecture may include any number of interconnected buses and bridges, which are linked together through various circuits of one or more processors represented by processor 610 and one or more memories represented by the memory 620. The bus architecture may also link together various other circuits, such as peripherals, voltage regulators, and power management circuits. The bus interface provides an interface. The transceiver 600 may include multiple elements, i.e., include a transmitter and a receiver, units for providing communication with various other devices over transmission media including wireless channels, wired channels, fiber optic cables, and the like. For different user equipment, the user interface 630 may also be an interface capable of externally connecting internal and external required devices. The connected devices include but are not limited to a keypad, a display, a speaker, a microphone, a joystick, etc.

The processor 610 is responsible for managing the bus architecture and general processing, and the memory 620 may store data used by the processor 610 when performing operations.

The processor 610 may be a central processing unit (CPU), an application specific integrated circuit (ASIC), a field-programmable gate array (FPGA), or a complex programmable logic device (CPLD), the processor may also use a multi-core architecture.

The processor is configured to execute any of the methods applied to the terminal device provided by the embodiments of the application according to the obtained executable instructions by calling the computer program stored in the memory. The processor and memory may also be physically separated.

FIG. 7 is a schematic structural diagram of a network side device according to an embodiment of the application. The network side device may be used to perform the TA based synchronization method shown in FIG. 3. As shown in FIG. 7, the transceiver 700 is used for receiving and transmitting data under control of processor 710.

In FIG. 7, a bus architecture may include any number of interconnected buses and bridges, which are linked together through various circuits of one or more processors represented by processor 710 and one or more memories represented by the memory 720. The bus architecture may also link together various other circuits, such as peripherals, voltage regulators, and power management circuits. The bus interface provides an interface. The transceiver 700 may include multiple elements, i.e., include a transmitter and a receiver, units for providing communication with various other devices over transmission media including wireless channels, wired channels, fiber optic cables, and the like. The processor 710 is responsible for managing the bus architecture and general processing, and the memory 720 may store data used by the processor 710 when performing operations.

The processor 710 may be a central processing unit (CPU), an application specific integrated circuit (ASIC), a field-programmable gate array (FPGA), or a complex programmable logic device (CPLD), the processor may also use a multi-core architecture.

An embodiment of the application provides a processor readable storage medium storing a computer program that, when executed by a processor, causes the processor to perform the methods provided by the above embodiments, the method includes:
determining a second TA between the terminal device and a cell where a target beam for data transmission and reception of the terminal device is located; and
applying the second TA, where the second TA is used for synchronization between the terminal device and the cell where the target beam is located.

The processor readable storage medium may be any available medium or data storage device that may be accessed by the processor, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

An embodiment of the application provides a processor readable storage medium storing a computer program that, when executed by a processor, causes the processor to perform the methods provided by the above embodiments, the method includes:
transmitting first indication information to a terminal device to trigger the terminal device to apply second TA based on the first indication information,
where the second TA is TA between the terminal device and a cell where a target beam for data transmission and reception of the terminal device is located; and
the first indication information is used to indicate the terminal device to hand over from a current beam for data transmission and reception to the target beam.

The processor readable storage medium may be any available medium or data storage device that may be accessed by the processor, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

An embodiment of the application provides a computer program product. The computer program product includes instructions. When the computer program product is run on a computer, it causes the computer to perform the steps of the above methods. For details, please refer to the implementation of the above methods. The same part is not repeated here.

It is apparent to those skilled in the art that various modifications and variations may be made in the application without departing from the scope of the application. Thus, provided that these modifications and variations of the application are within the scope of claims of the application and their equivalents, the application is also intended to cover such modifications and variations.

## Claims

1. A timing advance, TA, based synchronization method, applied to a terminal device, comprising:
determining a second TA between the terminal device and a cell where a target beam for data transmission and reception of the terminal device is located; and
applying the second TA, wherein the second TA is used for synchronization between the terminal device and the cell where the target beam is located.

2. The method of claim 1, wherein applying the second TA comprises:
receiving first indication information transmitted from a network side device, wherein the first indication information is used to indicate the terminal device to hand over from a current beam for data transmission and reception to the target beam; and
triggering to apply the second TA based on the first indication information.

3. The method of claim 1, wherein determining the second TA between the terminal device and the cell where the target beam for data transmission and reception of the terminal device is located comprises:
receiving first indication information transmitted from a network side device, wherein the first indication information is used to indicate the terminal device to hand over from a current beam for data transmission and reception to the target beam; and
determining, based on the first indication information, the second TA between the terminal device and the cell where the target beam for data transmission and reception of the terminal device is located.

4. The method of claim 2 or 3, wherein the first indication information is first downlink control information, DCI, and/or first media access control-control element, MAC-CE.

5. The method of claim 3, wherein the first indication information comprises one or more of the following:
TA of the cell where the target beam is located;
a difference of the TA of the cell where the target beam is located relative to TA of a current serving cell of the terminal device;
a difference of the TA of the cell where the target beam is located relative to TA of a cell where the current beam is located;
an indication indicating that a TA difference is based on the current serving cell;
an indication indicating that a TA difference is based on the cell where the current beam is located;
a physical cell identifier, PCI, of the cell where the target beam is located;
a transmission configuration indication, TCI, state identifier corresponding to the target beam;
a beam index corresponding to the target beam;
a band width part, BWP, identifier associating with the cell where the target beam is located;
an index of the cell where the target beam is located;
an indication identifier triggering the terminal device to apply the second TA;
an indication indicating that the second TA of the cell where the target beam is located is the same as the TA of the current serving cell; or
an indication indicating that the second TA of the cell where the target beam is located is the same as the TA of the cell where the current beam is located.

6. The method of claim 1, further comprising:
receiving first configuration information transmitted from a network side device, wherein the first configuration information is used to indicate the second TA;
wherein determining the second TA between the terminal device and the cell where the target beam for data transmission and reception of the terminal device is located comprises:
determining the second TA based on the first configuration information.

7. The method of claim 6, wherein the first configuration information is any one of a first radio resource control, RRC, message, second DCI, or a second MAC-CE.

8. The method of claim 6, wherein the first configuration information comprises one or more of the following:
an indication indicating that a TA difference is based on a current serving cell of the terminal device;
an indication indicating that a TA difference is based on a cell where a current beam is located;
a list of TA values of a cell where a candidate target beam is located;
a list of TA differences between a TA value of the cell where the target beam is located and a TA value of the current serving cell of the terminal device;
a list of TA differences between the TA value of the cell where the target beam is located and a TA value of the cell where the current beam is located;
a list of PCIs of the cell where the candidate target beam is located;
a list of TCI state identifiers corresponding to the candidate target beam;
a list of beam indexes corresponding to the candidate target beam;
a list of BWP identifiers associating with the cell where the candidate target beam is located;
a list of indexes of the cell where the candidate target beam is located;
an indication indicating that the second TA of the cell where the candidate target beam is located is the same as the TA of the current serving cell; or
an indication indicating that the second TA of the cell where the candidate target beam is located is the same as the TA of the cell where the current beam is located.

9. The method of claim 1 or 2, further comprising:
receiving second configuration information transmitted from a network side device, wherein the second configuration information comprises one or more of the following:
sounding reference signal, SRS, configuration information;
uplink data scheduling configuration information;
a list of downlink reference signal configuration information corresponding to a current serving cell of the terminal device and a cell where a candidate target beam is located;
a list of PCIs of the cell where the candidate target beam is located;
a list of TCI state identifiers corresponding to the candidate target beam;
a list of beam indexes corresponding to the candidate target beam;
a list of BWP identifiers associating with the cell where the candidate target beam is located; or
a list of indexes of the cell where the candidate target beam is located.

10. The method of claim 9, wherein the second configuration information is any one of a second RRC message, third DCI, or a third MAC-CE.

11. The method of claim 9, further comprising:
performing uplink signal transmission or uplink data transmission based on the SRS configuration information and/or uplink data scheduling configuration information, to make the network side device measure the uplink signal or the uplink data and determine, based on a measurement result, a TA value between the terminal device and the current serving cell and/or a TA value between the terminal device and the cell where the candidate target beam is located.

12. The method of claim 9, further comprising:
measuring a downlink reference signal transmitted from the network side device based on the list of downlink reference signal configuration information corresponding to the current serving cell and the cell where the candidate target beam is located,
wherein measuring the downlink reference signal transmitted from the network side device comprises one or more of the following:
measuring a reception time of each of downlink reference signals in the list of downlink reference signal configuration information;
measuring a reception time difference of each of the downlink reference signals relative to the cell where the current beam is located; or
measuring a reception time difference of each of the downlink reference signals relative to the current serving cell.

13. The method of claim 12, further comprising:
transmitting second indication information to the network side device, wherein the second indication information comprises one or more of the following:
a list of reception time of each of the downlink reference signals;
a list of reception time differences relative to the cell where the current beam is located;
a list of reception time differences relative to the current serving cell;
an indication indicating that a reception time difference is based on the current serving cell;
an indication indicating that a reception time difference is based on the cell where the current beam is located;
a list of PCIs of the cell where the candidate target beam is located;
a list of TCI state identifiers corresponding to the candidate target beam;
a list of beam indexes corresponding to the candidate target beam;
a list of BWP identifiers associating with the cell where the candidate target beam is located; or
a list of indexes of the cell where the candidate target beam is located.

14. The method of claim 5 or 8, wherein the second TA is determined based on a TA difference indicated by the current serving cell and the TA value of the current serving cell and/or based on a TA difference indicated by the cell where the current beam is located and the TA value of the cell where the current beam is located.

15. The method of claim 1 or 2, further comprising:
maintaining first TA, wherein the first TA is TA between the terminal device and the current serving cell of the terminal device.

16. A timing advance, TA, based synchronization method, applied to a network side device, comprising:
transmitting first indication information to a terminal device, wherein the first indication information is used to indicate the terminal device to apply second TA when the terminal device hands over from a current beam for data transmission and reception to a target beam,
wherein the second TA is TA between the terminal device and a cell where a target beam for data transmission and reception of the terminal device is located and the second TA is used for synchronization between the terminal device and the cell where the target beam is located.

17. The method of claim 16, further comprising:
transmitting first configuration information to the terminal device, wherein the first configuration information is used to indicate the second TA.

18. The method of claim 17, wherein the first configuration information is any one of a first radio resource control, RRC, message, second downlink control information, DCI, or a second media access control-control element, MAC-CE.

19. The method of claim 16 or 17, further comprising:
transmitting second configuration information to the terminal device, wherein the second configuration information comprises one or more of the following:
sounding reference signal, SRS, configuration information;
uplink data scheduling configuration information;
a list of downlink reference signal configuration information corresponding to a current serving cell of the terminal device and a cell where a candidate target beam is located;
a list of PCIs of the cell where the candidate target beam is located;
a list of TCI state identifiers corresponding to the candidate target beam;
a list of beam indexes corresponding to the candidate target beam;
a list of band width part, BWP, identifiers associating with the cell where the candidate target beam is located; or
a list of indexes of the cell where the candidate target beam is located.

20. The method of claim 19, wherein the second configuration information is any one of a second RRC message, third DCI, or a third MAC-CE.

21. The method of claim 19, further comprising:
measuring uplink signal or uplink data transmitted from the terminal device based on the SRS configuration information and/or uplink data scheduling configuration information, and determining, based on a measurement result, a TA value between the terminal device and the current serving cell and/or a TA value between the terminal device and the cell where the candidate target beam is located,
wherein measuring the uplink signal or uplink data transmitted from the terminal device comprises one or more of the following:
measuring the TA value between the terminal device and the current serving cell and the TA value between the terminal device and the cell where the candidate target beam is located;
measuring a TA difference of the TA value of the cell where the candidate target beam is located relative to the TA value of the current serving cell; or
measuring a TA difference of the TA value of the cell where the candidate target beam is located relative to a TA value of a cell where the current beam is located.

22. The method of claim 21, further comprising:
receiving second indication information transmitted from the terminal device;
determining, based on the second indication information, the TA value between the terminal device and the current serving cell and/or the TA value between the terminal device and the cell where the candidate target beam is located,
wherein the second indication information comprises one or more of the following:
a list of reception time of each of the downlink reference signals in the downlink reference signal configuration information list;
a list of reception time differences relative to the cell where the current beam is located;
a list of reception time differences relative to the current serving cell;
an indication indicating that a reception time difference is based on the current serving cell;
an indication indicating that a reception time difference is based on the cell where the current beam is located;
a list of PCIs of the cell where the candidate target beam is located;
a list of TCI state identifiers corresponding to the candidate target beam;
a list of beam indexes corresponding to the candidate target beam;
a list of BWP identifiers associating with the cell where the candidate target beam is located; or
a list of indexes of the cell where the candidate target beam is located.

23. A terminal device, comprising a memory, a transceiver, and a processor,
wherein the memory is used to store a computer program, the transceiver is used to transmit and receive data under control of the processor, and the processor is used to read the computer program in the memory and perform the following operations:
determining a second TA between the terminal device and a cell where a target beam for data transmission and reception of the terminal device is located; and
applying the second TA, wherein the second TA is used for synchronization between the terminal device and the cell where the target beam is located.

24. The terminal device of claim 23, wherein applying the second TA comprises:
receiving first indication information transmitted from a network side device, wherein the first indication information is used to indicate the terminal device to hand over from a current beam for data transmission and reception to the target beam; and
triggering to apply the second TA based on the first indication information.

25. The terminal device of claim 24, wherein the first indication information is first downlink control information, DCI, and/or first media access control-control element, MAC-CE.

26. The terminal device of claim 24, wherein the first indication information comprises one or more of the following:
TA of the cell where the target beam is located;
a difference of the TA of the cell where the target beam is located relative to TA of a current serving cell of the terminal device;
a difference of the TA of the cell where the target beam is located relative to TA of a cell where the current beam is located;
an indication indicating that a TA difference is based on the current serving cell;
an indication indicating that a TA difference is based on the cell where the current beam is located;
a physical cell identifier, PCI, of the cell where the target beam is located;
a transmission configuration indication, TCI, state identifier corresponding to the target beam;
a beam index corresponding to the target beam;
a band width part, BWP, identifier associating with the cell where the target beam is located;
an index of the cell where the target beam is located;
an indication identifier triggering the terminal device to apply the second TA;
an indication indicating that the second TA of the cell where the target beam is located is the same as the TA of the current serving cell; or
an indication indicating that the second TA of the cell where the target beam is located is the same as the TA of the cell where the current beam is located.

27. The terminal device of claim 23, wherein the operations further comprise:
receiving first configuration information transmitted from a network side device, wherein the first configuration information is used to indicate the second TA;
wherein determining the second TA between the terminal device and the cell where the target beam for data transmission and reception of the terminal device is located comprises:
determining the second TA based on the first configuration information.

28. The terminal device of claim 27, wherein the first configuration information is any one of a first radio resource control, RRC, message, second DCI, or a second MAC-CE.

29. The terminal device of claim 27, wherein the first configuration information comprises one or more of the following:
an indication indicating that a TA difference is based on a current serving cell of the terminal device;
an indication indicating that a TA difference is based on a cell where a current beam is located;
a list of TA values of a cell where a candidate target beam is located;
a list of TA differences between a TA value of the cell where the target beam is located and a TA value of the current serving cell of the terminal device;
a list of TA differences between the TA value of the cell where the target beam is located and a TA value of the cell where the current beam is located;
a list of PCIs of the cell where the candidate target beam is located;
a list of TCI state identifiers corresponding to the candidate target beam;
a list of beam indexes corresponding to the candidate target beam;
a list of BWP identifiers associating with the cell where the candidate target beam is located;
a list of indexes of the cell where the candidate target beam is located;
an indication indicating that the second TA of the cell where the candidate target beam is located is the same as the TA of the current serving cell; or
an indication indicating that the second TA of the cell where the candidate target beam is located is the same as the TA of the cell where the current beam is located.

30. The terminal device of claim 23, wherein the operations further comprise:
receiving second configuration information transmitted from a network side device, wherein the second configuration information comprises one or more of the following:
sounding reference signal, SRS, configuration information;
uplink data scheduling configuration information;
a list of downlink reference signal configuration information corresponding to a current serving cell of the terminal device and a cell where a candidate target beam is located;
a list of PCIs of the cell where the candidate target beam is located;
a list of TCI state identifiers corresponding to the candidate target beam;
a list of beam indexes corresponding to the candidate target beam;
a list of BWP identifiers associating with the cell where the candidate target beam is located; or
a list of indexes of the cell where the candidate target beam is located.

31. The terminal device of claim 30, wherein the second configuration information is any one of a second RRC message, third DCI, or a third MAC-CE.

32. The terminal device of claim 30, wherein the operations further comprise:
performing uplink signal transmission or uplink data transmission based on the SRS configuration information and/or uplink data scheduling configuration information, to make the network side device measure the uplink signal or the uplink data and determine, based on a measurement result, a TA value between the terminal device and the current serving cell and/or a TA value between the terminal device and the cell where the candidate target beam is located.

33. The terminal device of claim 30, wherein the operations further comprise:
measuring a downlink reference signal transmitted from the network side device based on the list of downlink reference signal configuration information corresponding to the current serving cell and the cell where the candidate target beam is located,
wherein measuring the downlink reference signal transmitted from the network side device comprises one or more of the following:
measuring a reception time of each of downlink reference signals in the list of downlink reference signal configuration information;
measuring a reception time difference of each of the downlink reference signals relative to the cell where the current beam is located; or
measuring a reception time difference of each of the downlink reference signals relative to the current serving cell.

34. The terminal device of claim 33, wherein the operations further comprise:
transmitting second indication information to the network side device, wherein the second indication information comprises one or more of the following:
a list of reception time of each of the downlink reference signals;
a list of reception time differences relative to the cell where the current beam is located;
a list of reception time differences relative to the current serving cell;
an indication indicating that a reception time difference is based on the current serving cell;
an indication indicating that a reception time difference is based on the cell where the current beam is located;
a list of PCIs of the cell where the candidate target beam is located;
a list of TCI state identifiers corresponding to the candidate target beam;
a list of beam indexes corresponding to the candidate target beam;
a list of BWP identifiers associating with the cell where the candidate target beam is located; or
a list of indexes of the cell where the candidate target beam is located.

35. The terminal device of claim 26, wherein the second TA is determined based on a TA difference indicated by the current serving cell and the TA value of the current serving cell and/or based on a TA difference indicated by the cell where the current beam is located and the TA value of the cell where the current beam is located.

36. The terminal device of claim 23, wherein the operations further comprise:
maintaining first TA, wherein the first TA is TA between the terminal device and the current serving cell of the terminal device.

37. A network side device, comprising a memory, a transceiver, and a processor,
wherein the memory is used to store a computer program, the transceiver is used to transmit and receive data under control of the processor, and the processor is used to read the computer program in the memory and perform the following operations:
transmitting first indication information to a terminal device to trigger the terminal device to apply second TA based on the first indication information,
wherein the second TA is TA between the terminal device and a cell where a target beam for data transmission and reception of the terminal device is located; and
the first indication information is used to indicate the terminal device to hand over from a current beam for data transmission and reception to the target beam.

38. A timing advance, TA, based synchronization apparatus, applied to a terminal device, comprising:
a determining unit, used for determining a second TA between the terminal device and a cell where a target beam for data transmission and reception of the terminal device is located; and
an applying unit, used for applying the second TA, wherein the second TA is used for synchronization between the terminal device and the cell where the target beam is located.

39. The apparatus of claim 38, wherein the applying unit comprises:
a first receiving sub-unit, used for receiving first indication information transmitted from a network side device, wherein the first indication information is used to indicate the terminal device to hand over from a current beam for data transmission and reception to the target beam; and
a triggering sub-unit, used for triggering to apply the second TA based on the first indication information.

40. The apparatus of claim 38, wherein the determining unit comprises:
a second receiving sub-unit, used for receiving first indication information transmitted from a network side device, wherein the first indication information is used to indicate the terminal device to hand over from a current beam for data transmission and reception to the target beam; and
a first determining sub-unit, used for determining, based on the first indication information, the second TA between the terminal device and the cell where the target beam for data transmission and reception of the terminal device is located.

41. The apparatus of claim 38, wherein the first indication information comprises one or more of the following:
TA of the cell where the target beam is located;
a difference of the TA of the cell where the target beam is located relative to TA of a current serving cell of the terminal device;
a difference of the TA of the cell where the target beam is located relative to TA of a cell where the current beam is located;
an indication indicating that a TA difference is based on the current serving cell;
an indication indicating that a TA difference is based on the cell where the current beam is located;
a physical cell identifier, PCI, of the cell where the target beam is located;
a transmission configuration indication, TCI, state identifier corresponding to the target beam;
a beam index corresponding to the target beam;
a band width part, BWP, identifier associating with the cell where the target beam is located;
an index of the cell where the target beam is located;
an indication identifier triggering the terminal device to apply the second TA;
an indication indicating that the second TA of the cell where the target beam is located is the same as the TA of the current serving cell; or
an indication indicating that the second TA of the cell where the target beam is located is the same as the TA of the cell where the current beam is located.

42. The apparatus of claim 38, further comprising: a first receiving unit, used for receiving first configuration information transmitted from a network side device, wherein the first configuration information is used to indicate the second TA;
in a procedure of determining the second TA between the terminal device and the cell where the target beam for data transmission and reception of the terminal device is located, the determining unit is used for:
determining the second TA based on the first configuration information.

43. A timing advance, TA, based synchronization apparatus, applied to a network side device, comprising:
a first transmitting unit, used for transmitting first indication information to a terminal device to trigger the terminal device to apply second TA based on the first indication information,
wherein the second TA is TA between the terminal device and a cell where a target beam for data transmission and reception of the terminal device is located; and
the first indication information is used to indicate the terminal device to hand over from a current beam for data transmission and reception to the target beam.

44. A processor readable storage medium storing a computer program that, when executed by a processor, causes the processor to perform any one of the methods of claims 1 to 15, and/or perform any one of the methods of claims 16 to 22.
